# FASCICULE DE BREVET EUROPEEN

(11) **EP 0 557 223 B1**
(45) Date de publication et mention de la délivrance du brevet: **09.04.1997**
(21) Numéro de dépôt: 93420080.9
(22) Date de dépôt: 19.02.1993
(51) Int. Cl.: B60B 7/12

(54) **Fixation d'enjoliveur de roue d'automobile**
Befestigung einer Zierblende an einem Radfahrzeug
Fastening of a wheel cover to a vehicle wheel

(30) Priorité: 20.02.1992 FR 9202197
(43) Date de publication de la demande: 25.08.1993
(73) Titulaire: PEGUFORM FRANCE, 01100 Oyonnax (FR)
(72) Inventeur: Armanet, Jean-Yves, F-39240 Arinthod (FR)
(74) Mandataire: Warcoin, Jacques

(56) Documents cités:
- GB-A- 2 061 204
- US-A- 2 746 805
- US-A- 4 708 398

## Description

La présente invention est relative à des perfectionnements apportés aux fixations des enjoliveurs de roues de véhicule automobile et elle concerne plus particulièrement les enjoliveurs dont la fixation s'effectue grâce à un jonc annulaire chargeant des pattes de fixation qui s'engagent dans une gorge de la roue.

La gorge des roues de véhicule qui reçoit les pattes de fixation des enjoliveurs présente des diamètres variant de 1 mm à 2,7 mm, ce qui est une tolérance très importante. Dans ces conditions, on est conduit à choisir, pour le diamètre du jonc élastique chargeant les pattes de fixation, une valeur maximale correspondant à la profondeur la plus importante de la gorge. Lorsque les roues présentent des gorges de diamètre maximal, la fixation connue ne présente pas d'inconvénients majeurs. Par contre, si le diamètre de la gorge est minimal, lors de la mise en place de l'enjoliveur, les pattes sont déformées de manière trop importante, de telle sorte qu'il se présente un risque de retournement de ces pattes vers l'extérieur, ce qui entraîne une rupture desdites pattes et la destruction de l'enjoliveur.

Les brevets US 4 708398 et 4 746805 décrivent chacun un enjoliveur comportant sur la périphérie de sa face interne des pattes élastiques dans chacune desquelles est fixé un fil métallique contraint élastiquement. Au moment du montage de l'enjoliveur sur la roue, les pattes se déforment pour pénétrer à l'intérieur de la gorge de la roue prévue à cet effet.

On remarque que le fil métallique est soutenu par les pattes à une distance éloignée du voile de l'enjoliveur et parallèlement à celui-ci. Les pattes sont prévues pour transmettre l'effort de pression au fil métallique pour qu'il pénètre dans la gorge de la roue. Dans le cas où la gorge de la roue est d'un diamètre inférieur à celui qui porte les pattes, ces dernières se déforment sous l'effort de pression d'une manière très importante, ce qui présente un risque de retournement vers l'extérieur et une rupture desdites pattes et la destruction de l'enjoliveur.

Le brevet GB 2 061204 concerne un enjoliveur de roue, comportant un anneau en fil métallique servant de pièce de fixation. L'anneau en fil est doté de parties en étriers faisant saillie vers l'extérieur dans le plan de l'anneau et s'encliquetant dans la gorge de la jante. L'anneau est maintenu sur l'enjoliveur dans des guides qui sont constitués par des éléments de recouvrement en forme de pattes recouvrant les étriers vers l'extérieur et présentant une certaine élasticité dans le sens radial.

On remarque que l'anneau en fil métallique est retenu parallèlement et à une distance du voile de l'enjoliveur.

Sous l'effort de la pression lors de la mise en place de l'enjoliveur les guides risquent de se déformer ou de se rompre provoquant une déformation permanente du voile de l'enjoliveur ou sa destruction.

Les perfectionnements qui font l'objet de la présente invention visent à remédier aux inconvénients précités et à assurer la réalisation d'une fixation d'enjoliveur qui permette le montage et le démontage des enjoliveurs sans inconvénient, quel que soit le diamètre des gorges de réception des pattes de fixation par rapport aux roues considérées.

La fixation suivant l'invention permet d'absorber les écarts de tolérance des gorges des roues et d'éliminer les charges excessives sur les pattes de fixation lors du montage et du démontage de l'enjoliveur.

A cet effet, la fixation suivant l'invention du genre comportant un jonc annulaire élastique chargeant des pattes de fixation solidaires du voile de l'enjoliveur, et qui sont aptes à s'engager élastiquement dans une gorge de la roue, les pattes de fixation étant agencées sur la périphérie de la face intérieure du voile de manière à retenir le jonc élastique dans un plan situé à une distance éloignée du voile, caractérisée en ce qu'entre deux pattes de fixation successives, elle comprend sur la face intérieure du voile, des moyens de retenue du jonc élastique, agencés de manière à retenir chaque partie du jonc élastique s'étendant entre deux pattes de fixation successives, dans un plan situé à faible distance de la face intérieure du voile en précontrainte centripète, de façon à encaisser la déformation de jonc et à éliminer tout effort entre les pattes de fixation et leur liaison avec l'enjoliveur lors du montage et/ou démontage de l'enjoliveur.

Le jonc comporte des cambrages en U dont la branche transversale disposée dans un plan différent de celui du reste du jonc est maintenue en précontrainte centripète dans des encoches ménagées dans des supports rigides et en ce que les parties non cambrées du jonc traversent avec jeu un logement ménagé dans chaque patte de fixation à l'opposé de son bec de coopération avec la gorge de la roue, les becs, les logements et les parties non cambrées du jonc se trouvant dans un même plan.

Le dessin annexé, donné à titre d'exemple, permettra de mieux comprendre l'invention, les caractéristiques qu'elle présente et les avantages qu'elle est susceptible de procurer :
Fig. 1 est une vue en perspective partielle d'un enjoliveur pourvu d'une fixation suivant l'invention.

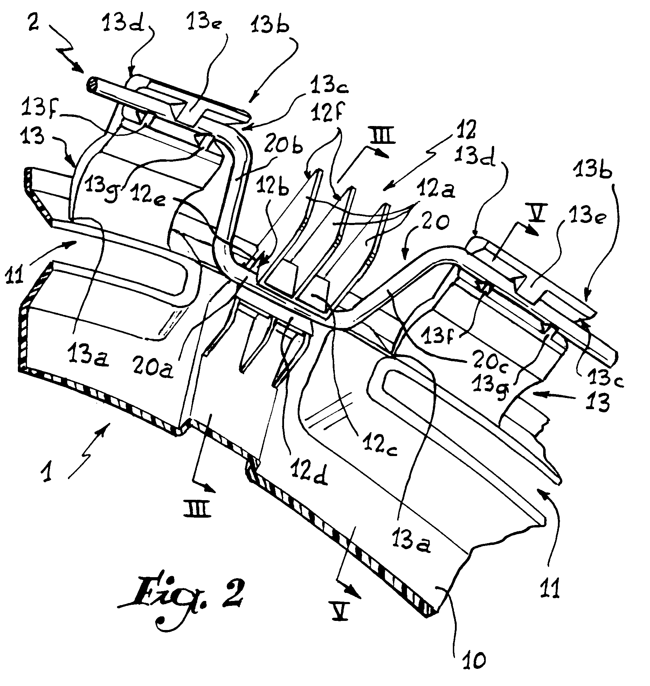

Fig. 2 est une vue de détail à plus grande échelle de la fixation illustrée en fig. 1.
Fig. 3 est une coupe suivant III-III (fig. 2).
Fig. 4 est une vue semblable à celle de fig. 3, mais illustrant l'enjoliveur monté sur une roue de véhicule.
Fig. 5 est une coupe suivant V-V (fig. 2).
Fig. 6 est une vue semblable à celle de fig. 5, mais montrant la coopération des pattes de fixation de l'enjoliveur avec une roue de véhicule.

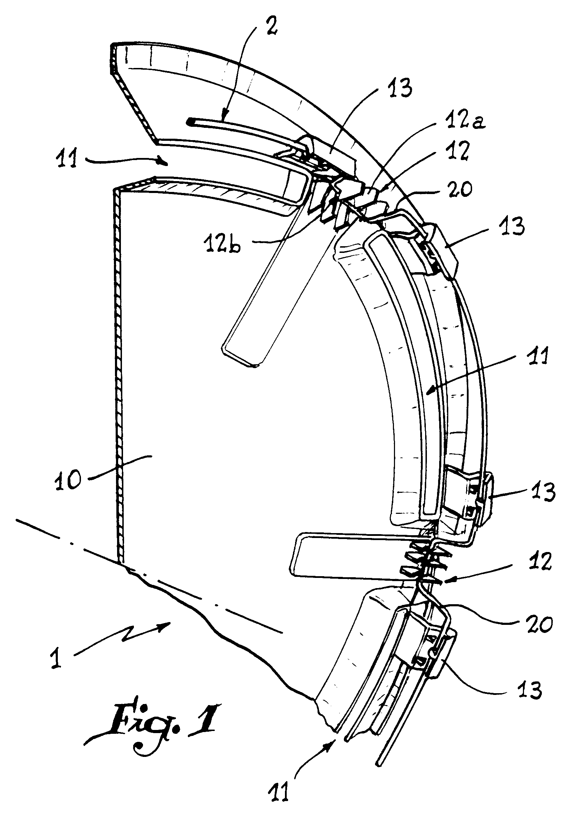

En fig. 1, on a illustré partiellement un enjoliveur 1 se présentant sous la forme générale d'un voile circulaire 10 comportant éventuellement des ouvertures décoratives (11). A proximité de sa périphérie, le voile 10 est pourvu d'un certain nombre de supports 12 destinés à maintenir un jonc élastique annulaire 2 par rapport à l'enjoliveur. Chaque support 12 est préférablement réalisé au moyen de plusieurs lamelles identiques 12a s'étendant parallèlement les unes par rapport aux autres et orientées de manière générale perpendiculairement au voile 10 de l'enjoliveur 1. Chacune des lamelles 12a comporte une encoche 12b en forme de U ouvert en direction du centre de l'enjoliveur. Les arêtes horizontales supérieures et inférieures de l'encoche 12b sont réunies par une cloison 12c, respectivement 12d qui constituent deux faces parallèles au voile 10. De même manière, les arêtes verticales des encoches 12b sont réunies par un fond 12e sensiblement perpendiculaire au voile 10. On observe que la distance séparant la cloison 12d formant la face inférieure de l'encoche 12b du voile 10 est faible par rapport à la hauteur totale des lamelles 12a.

De part et d'autre des supports 12, l'enjoliveur comporte une patte de fixation 13 s'élevant en gros perpendiculairement au voile 10 auquel elle est réunie par une zone 13a, de faible section. A partir de cette zone 13a la patte 13 est légèrement arquée et se termine par une tête 13b présentant en section transversale la forme d'un V dont la face concave tournée vers le centre de l'enjoliveur forme un logement 13c. La face convexe de la tête 13b constitue un bec 13d destiné à coopérer avec la roue du véhicule, comme on l'expliquera mieux plus loin. On observe que le logement concave 13c de la tête 13b est pourvu sur sa partie supérieure d'un ergot central 13e et sur sa face inférieure de deux ergots 13f, 13g disposés de manière symétrique par rapport à l'ergot 13e. Les trois ergots présentent une forme de dents à rochet, c'est-à-dire qu'ils sont pourvus chacun d'une face oblique tournée vers le plan de symétrie du logement concave 13c pour des raisons qu'on expliquera mieux plus loin.

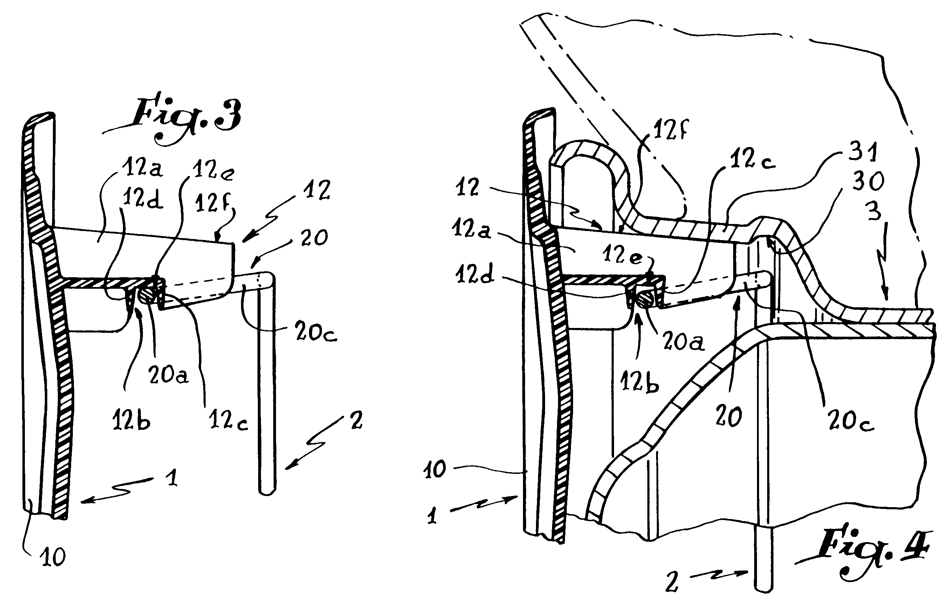

Le jonc annulaire 2 présente des cambrages 20 en forme de U en nombre égal à celui des supports 12 sur l'enjoliveur. La branche transversale 20a de chaque cambrage 20 qui se trouve à proximité de la face intérieure du voile 10 est disposée à l'intérieur des encoches 12b de chaque support 12. Les branches latérales 20b, 20c sont proches des faces latérales de chaque support 12, de manière à éviter tout déplacement angulaire du jonc 2 par rapport à l'enjoliveur 1. Le diamètre passant par les branches transversales 20a des cambrages 20 est prévu plus grand que celui passant par les fonds 12e des encoches 12b des supports 12, de telle sorte qu'en montant le jonc 2 par rapport aux supports 12, lesdites branches viennent en appui contre les fonds 12e de ces supports (fig. 3).

Chacune des parties non cambrées du jonc 2 traverse le logement concave 13c de la tête 13b de chaque patte de fixation 13 et elle est retenue de manière non démontable à l'intérieur de ce logement par les trois ergots 13e, 13f, 13g par rapport auxquels elle est engagée à force dans ledit logement concave grâce à la forme desdits ergots. Toutefois, le jonc présente un certain jeu entre le fond du logement 13c et les faces correspondantes des trois ergots 13e, 13f, 13g.

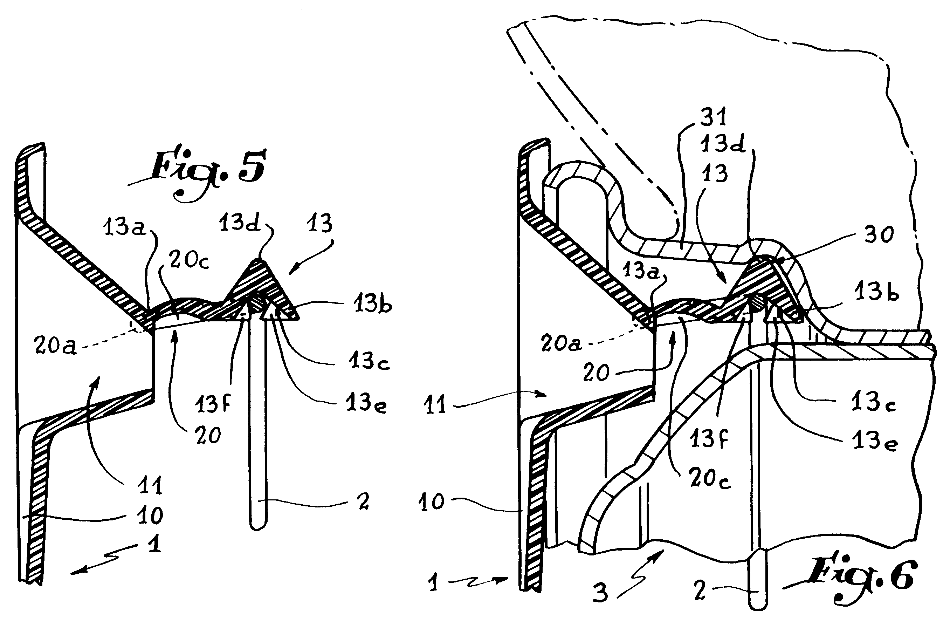

Comme indiqué plus haut, le jonc 2 est précontraint de manière centripète par le fond des encoches 12b afin qu'il puisse absorber une partie non négligeable des écarts de tolérance en diamètre des gorges 30 des roues homologuées 3 sur lesquelles l'enjoliveur 1 doit être monté (fig. 4 et 6). On observe en outre que la solidarisation du jonc 2 et de l'enjoliveur 1 s'effectue uniquement par l'intermédiaire des supports 12.

Lors du montage, l'effort d'enclenchement des becs 13d des têtes 13b des pattes 13 entraîne un léger basculement centripète desdites pattes qui se répercute sur le jonc 2 dont la déformation est encaissée par les supports 12 prévus à cet effet. Comme l'effort en question sur le fond des encoches 12b s'effectue à proximité du voile 10 de l'enjoliveur 1, la réaction à la contrainte des supports 12 par rapport au voile 10 est minime, du fait que le bras de levier est faible.

Une fois les pattes engagées dans la gorge 30, les branches transversales 20a des cambrages 20 sont décollées du fond 12e des encoches 12b (fig. 4), de sorte que la réaction élastique du jonc 2 ne s'applique que sur les pattes de fixation 13.

On observe que les arêtes extérieures 12f des supports 12 viennent en appui contre la face interne de la jante 31 de la roue 3 (fig. 4).

On note que les becs 13, les logements 13c et les parties non cambrées du jonc 2 se trouvent dans un même plan en gros parallèle au voile 10.

Lors du démontage de l'enjoliveur par rapport à la roue, le jonc 2 est déformé de manière centripète par l'extraction des becs 13d hors de la gorge 30, de telle sorte que les parties transversales 20a des cambrages 20 viennent à nouveau porter contre le fond des encoches 12b qui encaissent cet effort de démontage.

Grâce à la fixation suivant l'invention, il n'existe plus aucun risque de retournement des pattes de fixation, puisqu'on a plutôt tendance à les rentrer en direction du centre lors de la mise en place. En outre, la distance entre le fond des logements 13c et les ergots des pattes 13 qui est supérieure au diamètre du jonc 2 permet de laisser libre court à sa déformation circonférentielle inhérente à la mise en place et au démontage de l'enjoliveur. Enfin, on observe qu'aucun effort ne se développe entre les pattes et le voile de l'enjoliveur au niveau de leur liaison à ce dernier.

## Revendications

1. Fixation d'enjoliveur de roue (1) du genre comportant un jonc élastique (2) de forme générale annulaire, chargeant de manière centrifuge des pattes de fixation (13) solidaires du voile (10) de l'enjoliveur et qui sont aptes à s'engager élastiquement dans une gorge (30) de la roue (3), les pattes de fixation (13) étant agencées sur la périphérie de la face intérieure du voile (10) de manière à retenir le jonc élastique (2) dans un plan situé à une distance éloignée du voile (10), caractérisée en ce qu'entre deux pattes de fixation successives (13), elle comprend sur la face intérieure du voile (10), des moyens de retenue (12) du jonc élastique (2), agencés de manière à retenir chaque partie du jonc élastique (2) s'étendant entre deux pattes de fixation successives (13), dans un plan situé à faible distance de la face intérieure du voile (10) en précontrainte centripète, de façon à encaisser la déformation de jonc (2) et à éliminer tout effort entre les pattes de fixation (13) et leur liaison avec l'enjoliveur lors du montage et/ou démontage de l'enjoliveur.

2. Fixation suivant la revendication 1, caractérisée en ce que le jonc (2) comporte des cambrages (20) en forme de U dont la branche transversale (20a) qui est disposée dans un plan différent de celui du reste du jonc (2) et à faible distance de la face intérieure du voile (10) est maintenue en précontrainte centripète dans des encoches (12b) des moyens de retenue réalisés sous la forme de supports (12) et en ce que les parties non cambrées du jonc (2) traversent avec jeu un logement (13c) ménagé dans chaque patte de fixation (13) à l'opposé de son bec (13d) qui coopère avec la gorge (30) de la roue (3), les becs (13d), les logements (13c) et les parties non cambrées du jonc (2) se trouvant dans un même plan éloigné du voile (10).

3. Fixation suivant la revendication 2, caractérisée en ce que le diamètre du jonc élastique (2) est supérieur à celui de la circonférence passant par le fond (12e) des encoches (12b) des supports (12), lesdites encoches étant d'une part ouvertes en direction du centre de l'enjoliveur (1) et d'autre part situées à une faible distance du voile (10).

4. Fixation suivant la revendication 3, caractérisée en ce que les arêtes extérieures (12f) des supports (12) présentent un profil tel qu'une fois l'enjoliveur en place par rapport à la roue (3), lesdites arêtes viennent en appui contre la jante (31) de la roue (3).

5. Fixation suivant la revendication 2, caractérisée en ce que les branches (20a) des cambrages (20) sont proches des faces latérales des supports (12).

6. Fixation suivant la revendication 2, caractérisée en ce que les parties non cambrées du jonc élastique (2) sont engagées à force dans les logements (13c) des pattes de fixation (13) de manière que l'assemblage soit indémontable.

7. Fixation suivant la revendication 6, caractérisée en ce que chaque logement (13c) des pattes (13) est constitué par la face concave tournée vers le centre de l'enjoliveur du bec (13d) de la patte (13) correspondante et par des ergots (13e, 13f, 13g) en forme de dents à rochet.

## Claims

1. A wheel hubcap (1) fastening of the kind comprising a resilient spring clip (2) of generally annular shape, applying centrifugal loading on fixing tabs (13) secured to the web (10) of the hubcap (1) and suitable for engaging resiliently in a groove (30) of the wheel (3), the fixing tabs (13) being disposed on the periphery of the inside face of the web (10) so as to retain the spring clip (2) in a plane situated at a distance from the web (10), the hubcap being characterized in that between two successive fixing tabs (13) and on the inside face of the web (10) it comprises spring clip retaining means (12) organized to retain each portion of the spring clip (2) that extends between two successive fixing tabs (13) in a plane situated at a small distance from the inside face of the web (10) in centripetal prestress, in such a manner as to absorb deformation of the clip (2) and eliminate any force between the fixing tabs (13) and their connections with the hubcap while the hubcap is being put into place and/or removed.

2. A fastening according to claim 1, characterized in that the clip (2) includes U-shaped bends (20) each having a transverse branch (20a) disposed in a plane that is different from the plane of the remainder of the clip (2) and at a small distance from the inside face of the web (10), which branch is held in centripetal prestress in notches (12b) of the retaining means implemented in the form of supports (12), and in that the portions of the ring (2) that are not bent pass with clearance through a housing (13c) formed in each fixing tab (13) behind its nose (13d) which co-operates with the groove (30) of the wheel (3), the noses (13d), the housings (13c), and the portions of the clip (2) that are not bent lying in a common plane distant from the web (10).

3. A fastening according to claim 2, characterized in that the diameter of the spring clip (2) is greater than the diameter of the circumference passing through the bottoms (12e) of the notches (12b) of the supports (12), said notches being opened towards the center of the hubcap (1) and being situated at a small distance from the web (10).

4. A fastening according to claim 3, characterized in that the outside edges (12f) of the supports (12) have a profile such that once the hubcap is in place relative to the wheel (3), said edges bear against the rim (31) of the wheel (3).

5. A fastening according to claim 1, characterized in that the branches (20a) of the bends (20) are close to the side faces of the supports (12).

6. A fastening according to claim 2, characterized in that the portions of the spring clip (2) that are not bent are engaged by force in the housings (13c) of the fixing tabs (13) in such a manner that the assembly cannot be disassembled.

7. A fastening according to claim 6, characterized in that each housing (13c) of a tab (13) is constituted by the concave face looking towards the center of the hubcap of the nose (13d) of the corresponding tab (13), and by projections (13e, 13f, 13g) in the form of ratchet teeth.

## Patentansprüche

1. Befestigung einer Radzierblende (1), welche einen elastischen Drahtsprengring (2) von allgemein ringförmiger Gestalt aufweist, der mit der Verkleidungsplatte (10) der Zierblende fest verbundene Befestigungsnasen (13) radial nach außen gerichtet vorspannt und letztere elastisch in eine Hohlkehle (30) des Rades (3) einzugreifen vermögen, wobei die Befestigungsnasen (13) am Umfang der Innenfläche der Verkleidungsplatte (10) in der Weise angeordnet sind, daß der elastische Drahtsprengring (2) in einer Ebene in einen großen Abstand von der Verkleidungsplatte (10) gehalten wird, dadurch gekennzeichnet, daß sie auf der Innenfläche der Verkleidungsplatte (10) zwischen zwei aufeinanderfolgenden Befestigungsnasen (13) Halteeinrichtungen (12) für den elastischen Drahtsprengring (2) aufweist, welche in der Weise angebracht sind, daß sie jeden Bereich des elastischen Drahtsprengringes (2) zwischen zwei aufeinanderfolgenden Befestigungsnasen (13) in einem geringen Abstand von der Innenfläche der Verkleidungsplatte (10) unter radial zum Mittelpunkt gerichteter Vorspannung halten, um dadurch während der Montage und/oder Demontage der Radzierblende die Verformung des Drahtsprengringes (2) in Grenzen zu halten und jegliche Beanspruchung zwischen den Befestigungsnasen (13) und ihrer Verbindung mit der Radzierblende auszuschließen.

2. Befestigung nach Anspruch 1, dadurch gekennzeichnet, daß der Drahtsprengring (2) U-förmige Ausbiegungen (20) aufweist, deren Quersteg (20a) in einer von derjenigen des übrigen Drahtsprengringes (2) abweichenden und in geringem Abstand zur Innenfläche der Verkleidungsplatte (10) befindlichen Ebene liegt sowie in Schlitzen (12b) von Halteeinrichtungen, die in Form von Stützen (12) ausgebildet sind, unter radial nach innen gerichteter Vorspannung gehalten wird und dadurch, daß die nicht ausgebogenen Bereiche des Drahtsprengringes (2) eine in jeder Befestigungsnase (13) gegenüber deren mit der Hohlkehle (30) des Rades (3) zusammenwirkenden Spitze (13d) angebrachte Lagerstelle (13c) mit Spiel durchqueren, wobei sich die Spitzen (13d), die Lagerstellen (13c) und die nicht ausgebogenen Bereiche des Drahtsprengringes (2) in einer gleichen, von der Verkleidungsplatte (10) entfernten Ebene befinden.

3. Befestigung nach Anspruch 2, dadurch gekennzeichnet, daß der Durchmesser des elastischen Drahtsprengringes (2) größer ist als derjenige der Umfangslinie, die durch den Boden (12e) der Schlitze (12b) der Stützen (12) verläuft, wobei die Schlitze zum einen in Richtung zur Mitte der Zierblende (1) offen und zum anderen in geringem Abstand von der Verkleidungsplatte (10) angeordnet sind.

4. Befestigung nach Anspruch 3, dadurch gekennzeichnet, daß die Außenkanten (12f) der Stützen (12) ein solches Profil aufweisen, daß sie an der Felge (31) des Rades (3) zur Anlage kommen, wenn die Zierblende ihren Platz in bezug auf das Rad (3) einmal eingenommen hat.

5. Befestigung nach Anspruch 2, dadurch gekennzeichnet, daß sich die Schenkel (20a) der Ausbiegungen (20) in der Nähe der Seitenflächen der Stützen (12) befinden.

6. Befestigung nach Anspruch 2, dadurch gekennzeichnet, daß die nicht ausgebogenen Bereiche des elastischen Drahtsprengringes (2) unter Spannung an den Lagerstellen (13c) der Befestigungsnasen (13) zum Eingriff kommen derart, daß die Baugruppe undemontierbar wird.

7. Befestigung nach Anspruch 6, dadurch gekennzeichnet, daß jede Lagerstelle (13c) der Nasen (13) durch eine in bezug auf den den Mittelpunkt der Zierblende konkave Rotationsfläche der Spitze (13d) der entsprechenden Nase (13) sowie durch Nocken (13e, 13f, 13g) in Form von Rastzähnen gebildet wird.
